# EUROPÄISCHE PATENTSCHRIFT

(11) **EP 1 360 523 B1**
(45) Veröffentlichungstag und Bekanntmachung des Hinweises auf die Patenterteilung: **07.11.2007**
(21) Anmeldenummer: 01986882.7
(22) Anmeldetag: 14.12.2001
(51) Int. Cl.: G01S 13/88, G01F 23/284, G01S 13/10, G01S 7/288

(54) **VORRICHTUNG ZUR BESTIMMUNG DES FÜLLSTANDS EINES FÜLLGUTS IN EINEM BEHÄLTER**
DEVICE FOR DETERMINING THE LEVEL OF THE CONTENTS IN A CONTAINER
DISPOSITIF POUR DETERMINER LE NIVEAU DE REMPLISSAGE D'UN CONTENU DANS UN CONTENANT

(30) Priorität: 14.02.2001 DE 10106681
(43) Veröffentlichungstag der Anmeldung: 12.11.2003
(73) Patentinhaber: Endress + Hauser GmbH + Co. KG, 79689 Maulburg (DE)
(72) Erfinder: HEIDECKE, Frank, 79100 Freiburg (DE)
(74) Vertreter: Andres, Angelika Maria
(86) Internationale Anmeldenummer: PCT/EP2001/014788
(87) Internationale Veröffentlichungsnummer: WO 2002/067011

(56) Entgegenhaltungen:
- EP-A- 0 955 527
- DE-A- 3 107 444
- DE-A- 4 207 627
- US-A- 5 075 863

## Beschreibung

Die Erfindung bezieht sich auf eine Vorrichtung und ein Verfahren zur Bestimmung des Füllstands eines Füllguts in einem Behälter mit einer Sendeeinheit, die hochfrequente Signale erzeugt und mit einer vorgegebenen Sendewiederholfrequenz bzw. Schußrate (PRF = Pulse Repetition Frequency) in Richtung der Oberfläche des Füllguts aussendet, wobei die hochfrequenten Signale an der Oberfläche des Füllguts reflektiert werden, mit einer Empfangseinheit, die die reflektierten Signale empfängt, mit einer Verzögerungsschaltung, die die hochfrequenten Signale / reflektierten Signale entsprechend einem vorgegebenen Translationsfaktor in niederfrequente Signale transformiert, und mit einer Auswerteeinheit, die anhand der Laufzeit der Signale den Füllstand des Füllguts in dem Behälter bestimmt.

Vorrichtungen und Verfahren zur Bestimmung des Füllstandes über die Laufzeit von Meßsignalen (Pulse oder FMCW frequenzmodulierte kontinuierliche Signale) nutzen die physikalische Gesetzmäßigkeit aus, wonach die Laufstrecke gleich dem Produkt aus Laufzeit und Ausbreitungs-geschwindigkeit ist. Im Falle der Füllstandsmessung entspricht die Laufstrecke dem doppelten Abstand zwischen Antenne und Oberfläche des Füllguts. Das eigentliche Nutzechosignal und dessen Laufzeit werden bevorzugt anhand der Echofunktion bzw. der digitalen Hüllkurve des Niederfrequenzsignals bestimmt, wobei die Echokurve die Amplituden der Echosignale als Funktion des Abstandes 'Antenne - Oberfläche des Füllguts' bzw. der Laufzeit wiedergibt. Der Füllstand selbst ergibt sich dann aus der Differenz zwischen dem bekannten Abstand der Antenne von dem Boden des Behälters und dem durch die Messung bestimmten Abstand der Oberfläche des Füllguts von der Antenne.

In der DE 31 07 444 A1 wird ein hochauflösendes Impulsradarverfahren beschrieben. Ein Generator erzeugt erste Mikrowellenpulse und strahlt sie über eine Antenne mit einer vorgegebenen Sendewiederholfrequenz in Richtung der Oberfläche des Füllguts aus. Ein weiterer Generator erzeugt Referenz-Mikrowellenpulse, die gleich den ersten Mikrowellenpulsen sind, sich von diesen jedoch in der Sendewiederholfrequenz geringfügig unterscheiden. Das Echosignal und das Referenzsignal werden gemischt. Am Ausgang des Mischers steht ein Zwischenfrequenzsignal an. Das Zwischen-frequenzsignal hat den gleichen Verlauf wie das Echosignal, ist gegenüber diesem jedoch um einen Translationsfaktor gestreckt, der gleich einem Quotienten aus der Sendewiederholfrequenz und der Frequenzdifferenz zwischen der Wiederholfrequenz der ersten Mikrowellenpulse und der Wiederholfrequenz der Referenz-Mikrowellenpulse ist. Bei einer Sendewieder-holfrequenz von einigen Megahertz, einer Frequenzdifferenz von wenigen Hertz und einer Mikrowellenfrequenz von einigen Gigahertz liegt die Frequenz des Zwischenfrequenzsignals weit unterhalb von 1 MHz. Der Vorteil der Transformation auf die Zwischenfrequenz ist, daß relativ langsame und damit kostengünstige elektronische Bauteile zur Signalerfassung und/oder Signalauswertung verwendet werden können. Verwiesen wird in diesem Zusammenhang auch auf das Deutsche Gebrauchsmuster DE-GM 298 15 069.7, das die bekannte Transformationstechnik bei einem TDR-Füllstands-meßgerät beschreibt.

Die Zeitverzögerung mittels der sog. sequentiellen Abtastung setzt voraus, daß die Zeitdifferenz zwischen zwei aufeinanderfolgenden Abtastpunkten in hohem Maße konstant ist. Beim zuvor beschriebenen Mischerprinzip erzeugen bevorzugt zwei Quarzoszillatoren zwei Schwingungen mit geringfügig unterschiedlichen Frequenzen. Durch die geringfügige 'Verstimmung' der beiden Schwingungen entsteht eine linear mit jeder Periode ansteigende Phasenverschiebung.

Nachteil des Mischerprinizps ist einmal der relativ hohe Leistungsverbrauch, so daß hier die Energieversorgung mittels einer 4-20mA Stromschleife, einem weitverbreiteten Industriestandard, nur bei Meßraten von einem Meßwert pro Sekunde gedeckt werden kann.

Der Erfindung liegt die Aufgabe zugrunde, eine hochgenaue und kosten-günstige Verzögerungsschaltung vorzuschlagen. Weiterhin wird ein Verfahren vorgestellt, mit dem sich eine Translation der hochfrequenten Signale in den Niederfrequenzbereich kostengünstig und hochgenau realisieren läßt.

Die Aufgabe wird durch eine Verzögerungsschaltung gelöst, die die folgenden Elemente aufweist: einen Sendeoszillator, der Sendepulse mit einer Sendefrequenz erzeugt; einen Abtastoszillator, der Abtastpulse mit einer Abtastfrequenz erzeugt, wobei sich die Abtastfrequenz von der Sende-frequenz unterscheidet; eine digitale Abtastschaltung, die die Sendepulse mit den Abtastpulsen abtastet; eine Regel-/Steuereinheit, die die Frequenz-differenz zwischen dem Sendeoszillator und dem Abtastoszillator so einstellt, daß der vorgegebene Translationsfaktor erreicht wird. Insbesondere handelt es sich bei der digitalen Abtastschaltung um einen Phasendetektor, wobei die Sendefrequenz mit der Abtastfrequenz abgetastet wird. Erfindungsgemäß wird somit die Periodendauer der Sendefrequenz direkt zeitgedehnt - und somit in den Niederfrequenzbereich transformiert - abgebildet.

Ein wesentlicher Vorteil der erfindungsgemäßen Vorrichtung ist in ihrem geringen Leistungsverbrauch zu sehen. Der Leistungsverbrauch ist so gering, daß ein mit der digitalen Abtastschaltung ausgestattetes Füllstandsmeßgerät problemlos über eine Zweidrahtleitung betrieben werden kann. Als Beispiel sei die in der industriellen Anwendung weitverbreitete 4-20mA-Stromschleife genannt. Hier repräsentieren Stromwerte von 4-20mA die Meßwerte. Diese Stromwerte werden über dieselbe Zweidrahtleitung übertragen, über die das Meßgerät mit Strom versorgt wird.

Bei der aus dem Stand der Technik bekannt gewordenen analogen Mischung von Abtast- und Sendesignal kann üblicherweise pro Sekunde nur ein Meßwert zur Verfügung gestellt werden. Diese relativ geringe Meßrate hat ihre Ursache darin, daß die bekannten Zweidraht-Varianten von Radar-Füllstands-meßgeräten nur im intermittierenden Betrieb korrekt arbeiten. Intermittierend bedeutet, daß nach Aussendung eines Meßsignals und der nachfolgenden Durchführung der Messung das Gerät in einen Stand-by Mode geschaltet, in dem kaum noch Energie verbraucht wird. In der Stand-by Phase wird ein Energiespeicher aufgefüllt. Ist genügend Energie in dem Energiespeicher vorhanden, wird erst wieder das nächste Meßsignal ausgesendet. Proble-matisch hierbei ist, daß der mit einer Regel-/Steuereinheit gebildete Regelkreis in der Stand-by Phase geöffnet werden muss, die Differenzfrequenz und somit der Translationsfaktor driften unkontrolliert weg. Bevor die nächste Meßwertbestimmung erfolgen kann, muss die Differenz-frequenz in einer Einregelphase neu eingeregelt werden. Nachteilig ist, daß diese Einregelphase im Normalfall um einiges länger dauert als die eigentliche Meßphase.

Bei der erfindungsgemäßen digitalen Abtastschaltung entfällt nun diese Einregelphase völlig. Daher kann entweder eine größere Anzahl von Meßwerten pro Zeiteinheit zur Verfügung gestellt werden, oder aber bei einer Meßrate von 1/sec ist das Leistungsmittel des HF-Moduls nur halb so gross, als bei den bislang bekannt gewordenen Meßvorrichtungen.

Gemäß einer bevorzugten Weiterbildung der erfindungsgemäßen Vorrichtung ist die Sendefrequenz des Sendeoszillators fest eingestellt; hingegen ist die Abtastfrequenz des Abtastoszillators einstellbar.

Eine bevorzugte Ausgestaltung der erfindungsgemäßen Vorrichtung sieht vor, daß die digitale Abtastschaltung einen Meßzyklus bzw. eine Meßphase dadurch definiert bzw. die Frequenzdifferenz dadurch ermittelt, daß sie zwei aufeinanderfolgende Zeitpunkte bestimmt, an denen die steigende oder die fallende Flanke der Abtastpulse mit der fallenden oder steigenden Flanke der Sendepulse zusammenfällt, oder anders ausgedrückt, wenn die Sende-frequenz und die Abtastfrequenz in Phase sind.
Darüber hinaus wird vorgeschlagen, daß die digitale Abtastschaltung den Zeitpunkt, zu dem der Sendeoszillator und der Abtastoszillator in Phase sind, als Startzeitpunkt für die Messung und die Ermittlung der Frequenzdifferenz in einer Speichereinheit abspeichert.

Gemäß einer vorteilhaften Ausführungsform handelt es sich bei der Speichereinheit um ein D- FlipFlop. Eine alternative Ausgestaltung sieht vor, daß es sich bei der Speichereinheit um ein logisches Gatter, vorzugsweise ein UND-Gatter, und einen SR-Flip Flop handelt.

Zur Verringerung des Meßfehlers schlägt eine vorteilhafte Weiterbildung der erfindungsgemäßen Vorrichtung vor, daß die Regel-/Steuereinheit zur Bestimmung der Frequenzdifferenz eine Mittelung über mehrere Meßzyklen vornimmt. Hierdurch wird die Meßgenauigkeit verbessert.

Als besonders vorteilhaft bezüglich des Leistungsbedarfs hat es sich herausgestellt, wenn die Regel-/Steuereinheit die digitale Abtastschaltung nur kurz vor, während und nach den Zeitpunkten aktiviert, zu denen die Sendefrequenz und die Abtastfrequenz in Phase sind.

Gemäß einer bevorzugten Ausführungsform der erfindungsgemäßen Vorrichtung ist vorgesehen, daß der digitalen Abtastschaltung zwei Monopulsgeneratoren . nachgeschaltet sind, die aus den Sende- bzw. Empfangssignalen kurzzeitige Pulse generieren.

Eine besonders interessante Variante der erfindungsgemäßen Vorrichtung schlägt Frequenzteiler vor, die die Sendefrequenz und/oder die Abtast-frequenz vor und/oder nach der digitalen Abtastschaltung herunterteilen. Bevorzugt ist der Teilerfaktor vorgegeben und bestimmt sich nach 2*ⁿ*, wobei n = 1,2,3, ... ist. Durch eine Frequenzteilung des Sende- und des Abtast-signals vor der digitalen Abtastung, und/oder nach der digitalen Abtastung, wird die Schußrate, also die Rate, mit der Meßsignale in Richtung Füllgut ausgesendet werden, entsprechend verringert. Gleichzeitig wird die Meßzeit und der Meßbereich um den Teilerfaktor vergrößert.

Erfolgt die Frequenzteilung nach der digitalen Abtastung - wird also die Frequenzdifferenz vor der Frequenzteilung gemessen - so ist gemäß einer vorteilhaften Weiterbildung eine Rücksetzeinheit vorgesehen, die den jeweils nachfolgenden Meßzyklus startet, sobald die Phasendifferenz zwischen der Sendefrequenz und der Abtastfrequenz gleich ist dem Quotienten von 360° und dem Teilerfaktor 2*ⁿ*, wobei n = 1, 2, 3, ... ist. Hier wird also beispielsweise der nächste Meßzyklus gestartet, sobald die Phasendifferenz zwischen der Abtastfrequenz und der Sendefrequenz 90° beträgt. Diese Ausgestaltung ist insbesondere bei den sog. TDR-Meßgeräten sinnvoll, die breitbandige Monopulse an einem leitfähigen Element entlang in Richtung des Füllguts führen. Es hat sich nämlich herausgestellt, daß der Hochfrequenzteil eines entsprechenden TDR-Geräts optimal arbeitet, wenn die Sendewiederhol-frequenz (PRF = Pulse Repetition Frequency) bzw. die Schußrate nicht im Megahertz-Bereich, sondern bei einigen Kilohertz liegt. Insbesondere wird das Signal-Rauschverhältnis durch diese Maßnahme verbessert, ohne daß man auf die in vieler Hinsicht vorteilhaften Quarzoszillatoren, die im Megahertz-bereich arbeiten, verzichten müßte. Insbesondere setzt die Rücksetzeinheit die Flanke des Abtastsignals mit Hilfe des Differenzfrequenzsignals so zurück, daß die Phasenverschiebung zwischen dem Sende- und dem Abtastsignal nur noch über einen definierten Teilbereich von 360° geht. Folglich wird die Sendewiederholfrequenz bei gleichem Meßfenster um den Teilerfaktor 2*ⁿ* verkleinert, wobei n = 1, 2, 3, ... ist.

Wie bereits an vorhergehender Stelle erwähnt, handelt es sich bei dem Sendeoszillator als auch bei dem Abtastoszillator um Quarzoszillatoren.

Bezüglich des erfindungsgemäßen Verfahrens wird die Aufgabe durch die folgenden Verfahrensschritte gelöst: Es werden Sendepulse mit einer Sendefrequenz und Abtastpulse mit einer Abtastfrequenz erzeugt; die Sendepulse werden digital mit den Abtastpulsen abgetastet; die zwischen den Sendepulsen und den Abtastpulsen liegende Frequenzdifferenz wird so geregelt, daß der vorgegebene Translationsfaktor erreicht wird.

Die Erfindung wird anhand der nachfolgenden Zeichnungen näher erläutert. Es zeigt:
Fig. 1: eine schematische Darstellung der erfindungsgemäßen Vorrichtung,
Fig. 2: ein Blockschaltbild der erfindungsgemäßen Verzögerungsschaltung,
Fig. 3: die Darstellung einer ersten Speichereinheit, die in der erfindungs-gemäße Abtastschaltung verwendet wird,
Fig. 4: die Darstellungen unterschiedlicher Signalformen
   a) die Darstellung des Sendesignals Tx, das am Eingang des in Fig. 3 gezeigten UND-Gatters anliegt,
   b) die Darstellung des Abtastsignals Rx, das am Eingang des in Fig. 3 gezeigten UND-Gatters anliegt,
   c) die Darstellung des Ausgangssignals Y1, das am Ausgang des in Fig. 3 gezeigten UND-Gatters ansteht,
   d) die Darstellung des Ausgangssignals Y2, das am Q-Ausgang des in Fig. 3 gezeigten SR-Flipflops ansteht,

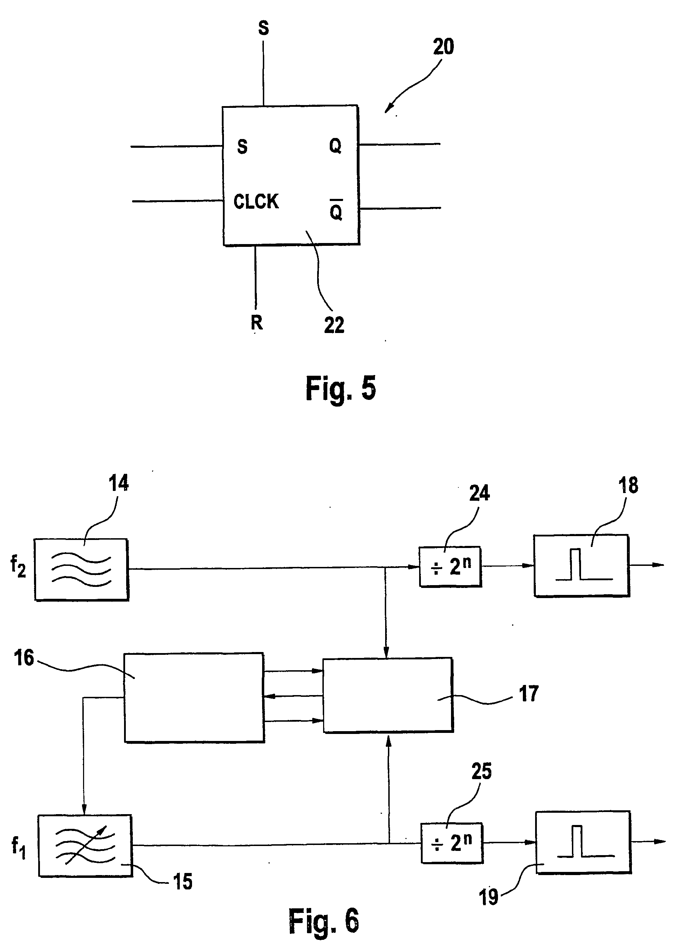

Fig. 5: die Darstellung einer zweiten Speichereinheit, die in der erfindungsgemäße Abtastschaltung verwendet wird,
Fig. 6: ein Blockschaltbild einer ersten Variante der erfindungsgemäßen Verzögerungsschaltung, wobei ein Frequenzteiler der digitalen Abtastschaltung nachgeschaltet ist,

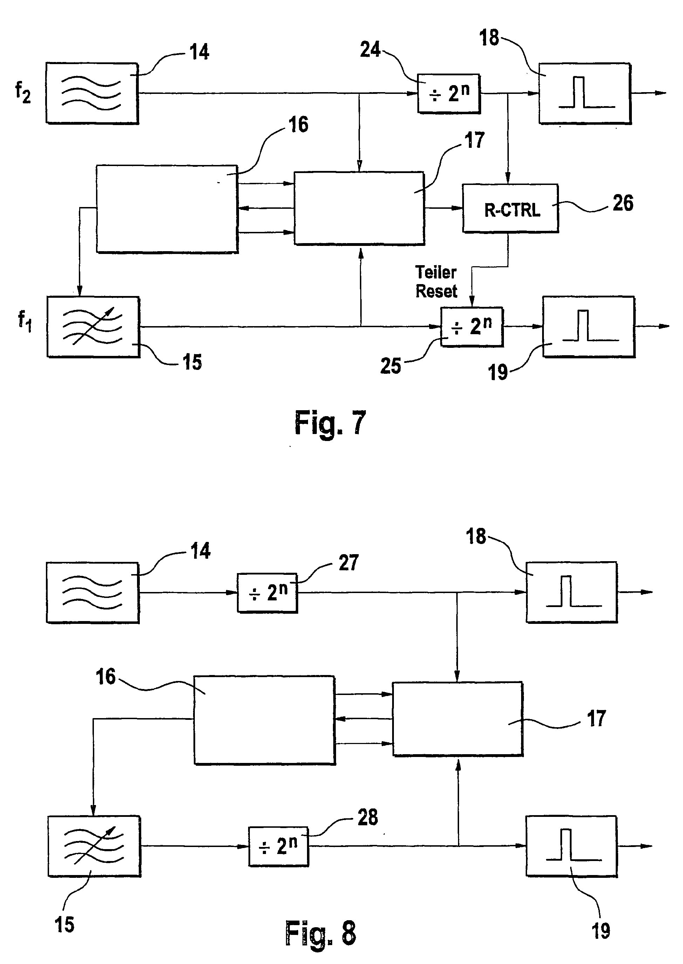

Fig. 7: ein Blockschaltbild einer zweiten Variante der erfindungsgemäßen Verzögerungsschaltung, wobei ein Frequenzteiler der digitalen Abtastschaltung nachgeschaltet ist, und
Fig. 8: ein Blockschaltbild der erfindungsgemäßen Verzögerungsschaltung, wobei eine Frequenzteilung vor der digitalen Abtastung durchgeführt wird.

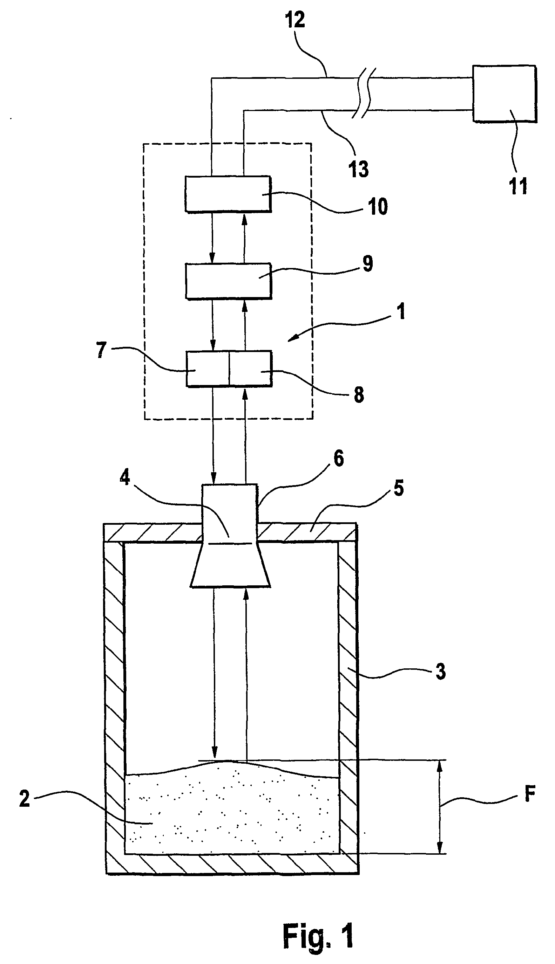

Fig. 1 zeigt eine schematische Darstellung der erfindungsgemäßen Vorrichtung 1. Die erfindungsgemäße Vorrichtung 1 dient in der gezeigten Ausgestaltung zur Messung des Füllstands F eines Füllguts 2, welches in dem Behälter 3 gelagert ist. Bei dem Füllstandsmeßgerät handelt es sich entweder um ein Kompaktgerät, bei dem der eigentliche Sensorteil und die elektro-nischen Komponenten in einem Gehäuse untergebracht sind, oder die elektronischen Komponenten sind räumlich von dem Sensorteil, hier der Antenne 6, getrennt. Entsprechende Füllstandsmeßgeräte, bei denen die Meßsignale frei über eine Antenne 6 abgestrahlt werden, werden übrigens von der Anmelderin beispielsweise unter der Bezeichnung Mikropilot vertrieben.

Die Antenne 6 ist im gezeigten Fall in einer Öffnung 4 im Deckel 5 des Behälters 3 angeordnet. Über die Antenne 6 werden die in der Sendeeinheit 7 erzeugten Meßsignale in Richtung der Oberfläche des Füllguts 2 abgestrahlt; ebenso werden die an der Oberfläche des Füllguts 3 reflektierten Echosignale von der Antenne 6 empfangen und gelangen von dort in die Empangseinheit 8. Über die Verzögerungsschaltung 9, die in den nachfolgenden Zeichnungen noch in unterschiedlichen Ausgestaltungen dargestellt ist, werden die Meßsignale bzw. die reflektierten Echo- oder Empfangssignale vom Hochfrequenzbereich in den Niederfrequenzbereich transformiert. Anhand der Laufzeit der niederfrequenten Signale ermittelt die Auswerteeinheit 10 den Füllstand F des Füllguts 3 in dem Behälter 2.

In dem gezeigten Ausführungsbeispiel ist das Füllstandsmeßgerät über eine Zweidrahtleitung 12, 13 mit einer entfernten Kontrollstelle 11 verbunden. Als Übertragungsstandard wird beispielsweise eine 4-20mA-Stromschleife verwendet. Selbstverständlich kann das Füllstandsmeßgerät mit der entfernten Kontrollstelle 11 auch über ein Bussystem digital kommunizieren. Als Beispiele für mögliche Bussysteme seien an dieser Stelle Profibus PA, Fieldbus Foundation und Ethernet genannt. Es versteht sich von selbst, daß die Kommunikation auch drahtlos erfolgen kann.

Neben dem in Fig. 1 gezeigten Füllstandsmeßgerät, das die Meßsignale über die Antenne 6 frei abstrahlt, sind auch Füllstandsmeßgeräte bekannt geworden, bei denen die Meß- und die Echosignale an einem leitfähigen Element entlang in Richtung des Füllguts 3 geführt werden. Entsprechende Geräte werden von der Anmelderin unter der Bezeichnung Levelflex angeboten und vertrieben.

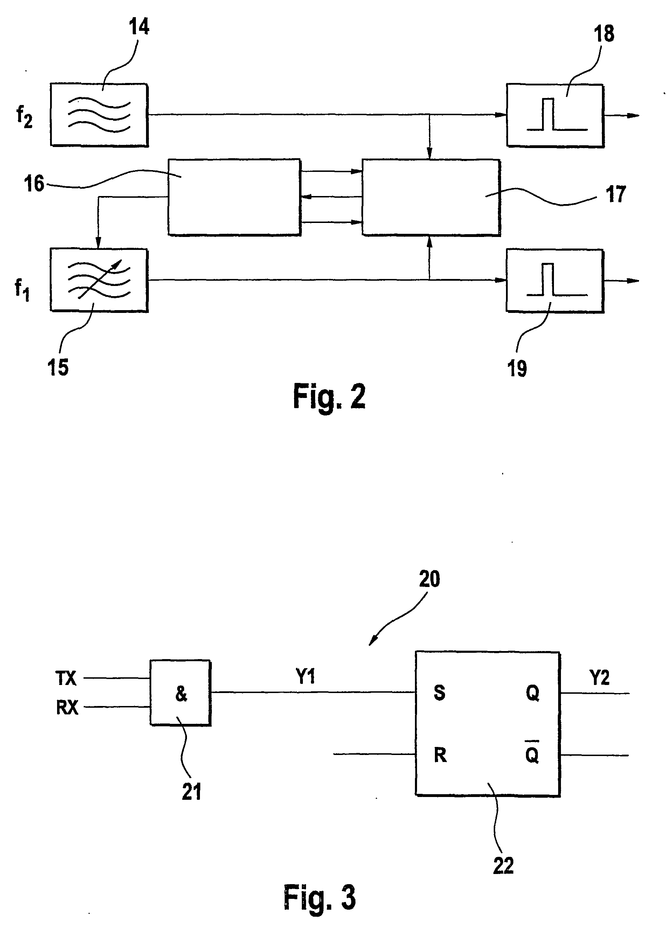

Fig. 2 zeigt ein Blockschaltbild der erfindungsgemäßen Verzögerungs-schaltung 9. Der Sendeoszillator 14 erzeugt Meßsignale mit der Sende-frequenz *f*₂. Der Abtastoszillator 15 erzeugt Abtastsignale mit der Abtastfrequenz *f*₁. Während im gezeigten Fall die Sendefrequenz *f*₂ konstant ist, ist die Abtastfrequenz *f*₁ einstellbar.

Die digitale Abtastschaltung 17 tastet die Sendefrequenz *f*₂ mit der Abtastfrequenz *f*₁ ab, arbeitet also wie ein Phasendetektor. Den Sende-/Empfangssignalen werden folglich periodisch Abtastwerte entnommen, wodurch ein zeitgedehnetes Abbild der Echokurve entsteht, wenn sichergestellt ist, daß die Frequenzdifferenz *f*₂ - *f*₁ zwischen Sendesignal und Abtastsignal konstant ist. Für die korrekte Einstellung der Frequenzdifferenz *f*₂ - *f*₁, sorgt die Regel-/Steuereinheit 16.
Durch die digitale Abtastung wird also die Periodendauer der Sendefrequenz f₂ direkt zeitgedehnt abgebildet. Im Prinzip reicht es auch, das Zusammen-fallen der Flanken von Sende- und Abtastsignalen zu detektieren. Weiterhin kann die erfindungsgemäße digitale Abtastschaltung 17 im Pulsbetrieb arbeiten, ohne daß die einzelnen Komponenten deren Schaltung vor dem Start der eignentlichen Meßphase neu eingeregelt werden müssen - wie dies bei den bisher bekannt gewordenen analogen Lösungen noch notwendig ist. Folglich ist ein großer Vorteil der erfindungsgemäßen digitalen Verzögerungs-schaltung 17 darin zu sehen, daß sie problemlos in Zweidrahtgeräten, bei denen bekanntlich nur eine begrenzte Leistung zur Verfügung gestellt werden kann, einsetzbar ist

Die beiden Monopulsgeneratoren 18, 19 dienen zur Ansteuerung des Hochfrequenzteils, das beispielsweise in dem von der Anmelderin vertriebenen Micropilot verwendet wird. Sie generieren aus den Sendesignalen und den Abtastsignalen nadelförmige Pulse von wenigen Nanosekunden Länge.

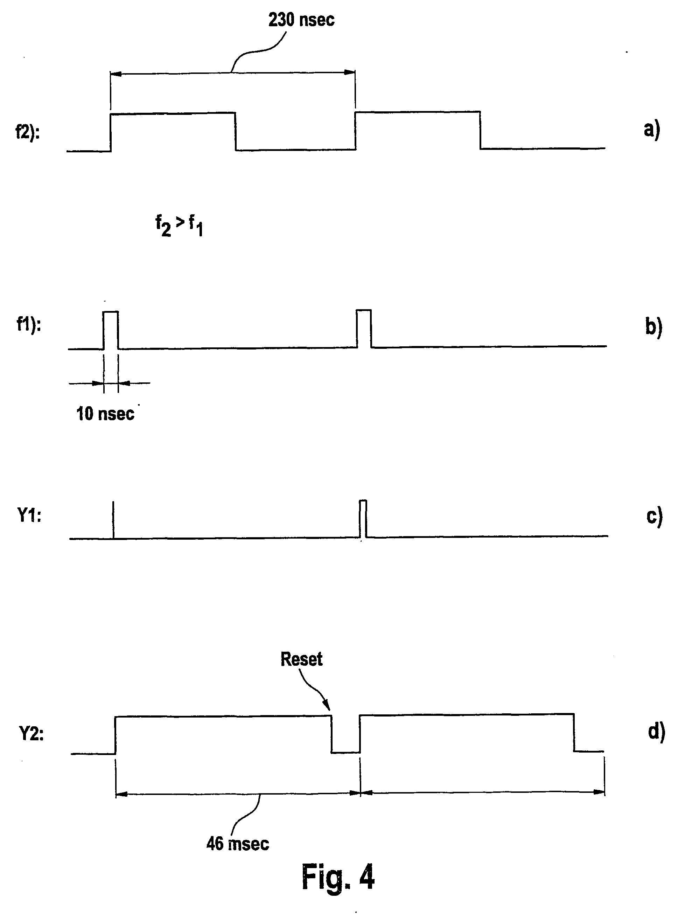

In Fig. 3 ist ein Blockschaltbild einer ersten Speichereinheit 20 zu sehen, die in der erfindungsgemäße Abtastschaltung 17 verwendet werden kann. Die an dem ersten Eingang des UND-Gatters 21 anliegenden Sendesignale Tx mit der Sendefrequenz *f*₂ des Sendeoszillators 14 haben den in Fig. 4a gezeigten Signalverlauf. Die Periodendauer beträgt z. B. 230 Nanosekunden. Die am zweiten Eingang des UND-Gatters 21 anliegenden Abtastsignale Rx des Abtastoszillators 15 mit der Abtastfrequenz *f*₁ sind gepulst, wobei die Pulsbreite einige wenige Nanosekunden, z.B. 10nsec, beträgt. Der entsprechende Signalverlauf der Abtastsignale ist in Fig. 4b gezeigt. Das UND-Gatter 21 liefert nun solange einen High-Pegel, wie sich die High-Pegel von Sendesignal Tx und Abtastsignal Rx übereinander schieben Dieser Signalverlauf ist in Fig. 4c dargestellt. Sobald die fallende Flanke des Abtastsignals Rx in Phase ist mit der steigenden Flanke des Sendesignals Tx bzw. allgemein: Nur solange wie gleichzeitig ein High-Signal des Abtastsignals und des Sendesignals am UND-Gatter anliegen, gibt das UND-Gatter 21 ein High-Signal aus. Diese Information über die In-Phase-Lage von Sendesignal Tx und Abtastsignal Rx wird mit Hilfe des SR-Flipflops 22 gespeichert. Das SR-Flipflop 22 gibt somit einen High-Pegel aus, welcher als Trigger dient und den Beginn einer neuen Meßphase anzeigt. Innerhalb dieser Meßphase erfolgt das Rücksetzen des SR-Flipflops 22 beispielsweise durch die Regel-/Steuerschaltung 16, die aus einem Mikrocontroller bestehen kann. Im Anschluß an ein RESET kann dann wieder der nachfolgende Zeitpunkt angezeigt werden, an dem eine Flanke des Abtastsignals Rx in Phase ist mit einer Flanke des Sendesignals Tx.
Die Periodendauer des am Q-Ausgangs des SR-Flipflops 22 anstehenden Signals Y2 - siehe auch Fig. 4d - ist die zeitgedehnte Periode des Sende-signals Tx, wobei der Translationsfaktor gleich ist dem Quotienten aus der Periodendauer des Ausgangssignals Y2 und der Periodendauer des Sendesignals Tx. Im gezeigten Fall beträgt der Translationsfaktor daher 46ms/230ns=200.000.

Fig. 5 zeigt eine zweite Variante einer Speichereinheit 20, die im Zusammenhang mit der erfindungsgemäßen Abtastschaltung 17 eingesetzt werden kann. Hier handelt es sich bei dem Speicherelement 20 um ein sog. D-Flipflop 23, welches die gleichen Eigenschaften aufweist, wie die in Fig. 3 gezeigte Kombination aus UND-Gatter 21 und SR-Flipflop 22. Der Einsatz eines D-Flipflops 23 ist insofern besonders günstig, da kein extra RESET-Signal benötigt wird und es sich hier um ein kostengünstiges Speicherelement 20 handelt.

Fig. 6 zeigt ein Blockschaltbild einer Variante der erfindungsgemäßen Verzögerungsschaltung 9, wobei jeweils ein Frequenzteiler 24, 25 nach der der digitalen Abtastung vorgesehen ist, bevor der eigentliche Sende- bzw. der Abtastpuls in den Monopulsgeneratoren 18, 19 erzeugt wird. Der Teilungsfaktor beträgt bevorzugt 2*ⁿ,* wobei n = 1, 2, 3, ... ist.

Durch diese Frequenzteilung verkleinert sich die Sendewiederholfrequenz (PRF) um den entsprechenden Teilerfaktor. Gleichzeitig erhöht sich der Meßbereich um diesen Teilerfaktor, oder anders ausgedrückt: die Sweep-Zeit, also die Zeit, die vergeht, bis der Meßbereich sequentiell abgetastet ist, wird um den Teilerfaktor vergrößert. Es versteht sich von selbst, daß die Differenzfrequenz auch nach der Teilung durch die Frequenzteiler 27, 28 bestimmt werden kann. Eine entsprechende Schaltung ist in Fig. 8 dargestellt.

In Fig. 7 ist ein Blockschaltbild einer weiteren Variante der erfindungs-gemäßen Verzögerungsschaltung dargestellt, wobei gleichfalls jeweils ein Frequenzteiler 24, 25 der digitalen Abtastschaltung 17 nachgeschaltet ist. Diese Schaltung ist - wie bereits an vorhergehender Stelle beschrieben - sehr vorteilhaft bei Füllstandsmeßgeräten, die den Füllstand mittels an einem leitfähigen Element entlanggeführter Meßsignale bestimmen (→ TDR-Meßgeräte). Hier ist es günstig, wenn die Sendewiederholfrequenz nicht in der Größenordnung von Megahertz sondern von einigen hundert Kilohertz liegt. Um nun weiterhin die bevorzugt mit Quarzoszillatoren 14, 15 arbeitende Verzögerungsschaltung 9 verwenden zu können, wird mit Hilfe des Differenzfrequenzsignals die Flanke des Abtastsignals am Frequenzteiler 25 zurückgesetzt. Die Zurücksetzung erfolgt über die Rücksetzschaltung 26. Nun wird also die Phasenverschiebung zwischen dem Sendesignal und dem Abtastsignal nicht über eine Periode - also über 360°-gemessen, sondern sie wird um den Teilerfaktor verringert und beträgt beispielsweise nur noch 45°. Damit bleiben die Sweep-Zeit und auch nahezu der Meßbereich unverändert. Lediglich die Sendewiederholfrequenz verringert sich - wie gewünscht- um den jeweiligen Teilerfaktor. Bei der in Fig. 8 gezeigten Schaltungsanordnung wird übrigens die Differenzfrequenz durch die digitale Abtastschaltung 17 nach der Frequenzteilung gemessen.

## Patentansprüche

1. Vorrichtung zur Bestimmung des Füllstands eines Füllguts in einem Behälter mit einer Sendeeinheit, die hochfrequente Signale erzeugt und mit einer vorgegebenen Pulswiederholfrequenz in Richtung der Oberfläche des Füllguts aussendet, wobei die hochfrequenten Signale an der Oberfläche des Füllguts reflektiert werden, mit einer Empfangseinheit, die die reflektierten Signale empfängt, mit einer Verzögerungsschaltung, die die hochfrequenten Signale /reflektierten Signale entsprechend einem vorgegebenen Translationsfaktor in niederfrequente Signale transformiert, wobei die Verzögerungsschaltung folgende Komponenten aufweist:
einen Sendeoszillator (14), der Sendepulse mit einer Sendefrequenz (*f*₂) erzeugt, einen Abtastoszillator (15), der Abtastpulse mit einer Abtastfrequenz (*f*₁) erzeugt, wobei die Abtastfrequenz (*f*₁) kleiner ist als die Sendefrequenz (*f*₂),
eine Regel-/Steuereinheit (16), die die Frequenzdifferenz (*f*₂ *- f*₁) zwischen dem Sendeoszillator (14) und dem Abtastoszillator (15) so einstellt, daß der vorgegebene Translationsfaktor erreicht wird
und mit einer Auswerteeinheit, die anhand der Laufzeit der Signale den Füllstand des Füllguts in dem Behälter bestimmt,
**dadurch gekennzeichnet,**
**daß** die Verzögerungsschaltung (9) eine digitale Abtastschaltung (17) aufweist, die die Sendepulse mit den Abtastpulsen abtastet, wobei die digitale Abtastschaltung (17) einen Meßzyklus **dadurch** definiert bzw. die Frequenzdifferenz (*f*₂ *- f*₁) **dadurch** bestimmt, daß sie zwei aufeinanderfolgende Zeitpunkte bestimmt, an denen die steigende oder die fallende Flanke der Abtastpulse mit der fallenden oder steigenden Flanke der Sendepulse zusammenfällt, wenn also die Sendefrequenz (*f*₂) und die Abtastfrequenz (*f*₁) in Phase sind, und daß die digitale Abtastschaltung (17) den Zeitpunkt, zu dem der Sendeoszillator (14) und der Abtastoszillator (15) in Phase sind, als Startzeitpunkt für die Messung und die Ermittlung der Frequenzdifferenz (*f*₂ - *f*₁) in einer Speichereinheit (20) abspeichert.

2. Vorrichtung nach Anspruch 1,
**dadurch gekennzeichnet,**
**daß** der Sendeoszillator (14) eine feste Sendefrequenz (*f*₂) aufweist und
**daß** die Abtastfrequenz (*f*₁) des Abtastoszillators (15) einstellbar ist.

3. Vorrichtung nach Anspruch 1,
**dadurch gekennzeichnet,**
**daß** es sich bei der Speichereinheit (20) um einen D- Flipflop (23) handelt,

4. Vorrichtung nach Anspruch 1,
**dadurch gekennzeichnet,**
**daß** es sich bei der Speichereinheit (20) um ein logisches Gatter, vorzugsweise ein UND-Gatter (21), und einen SR-Flipflop (22) handelt.

5. Vorrichtung nach Anspruch 1, 2, 3 oder 4,
**dadurch gekennzeichnet,**
**daß** die Regel-/Steuereinheit (16) zur Bestimmung der Frequenzdifferenz (*f*₂ - *f*₁) eine Mittelung über mehrere Meßzyklen vornimmt.

6. Vorrichtung nach einem oder mehreren der vorhergehenden Ansprüche,
**dadurch gekennzeichnet,**
**daß** die Regel-/Steuereinheit (16) die digitale Abtastschaltung (17) nur kurz vor, während oder nach den Zeitpunkten aktiviert, wenn die Sendefrequenz (*f*₂) und die Abtastfrequenz (*f*₁) in Phase sind.

7. Vorrichtung nach einem oder mehreren der vorhergehenden Ansprüche,
**dadurch gekennzeichnet,**
**daß** der digitalen Abtastschaltung (17) zwei Monopulsgeneratoren (18, 19) nachgeschaltet sind, die aus den Sende- bzw. Empfangssignalen Meßpulse generieren.

8. Vorrichtung nach einem oder mehreren der vorhergehenden Ansprüche,
**dadurch gekennzeichnet,**
**daß** Frequenzteiler (24, 25; 26, 27) vorgesehen sind, die die Sendefrequenz (*f*₂) und/oder die Abtastfrequenz (*f*₁) vor und/oder nach der digitalen Abtastschaltung (17) um einen vorgegebenen Teilerfaktor 2" herunterteilen, wobei n = 1, 2, 3, ... ist.

9. Vorrichtung nach Anspruch 8,
**dadurch gekennzeichnet,**
**daß** eine Rücksetzeinheit (26) vorgesehen ist, die den nachfolgenden Meßzyklus startet, sobald die Phasendifferenz zwischen der Sendefrequenz (*f₂*) und der Abtastfrequenz (*f*₁) gleich ist dem Quotienten von 360° und dem Teilerfaktor 2ⁿ, wobei n = 1, 2, 3, ... ist.

10. Vorrichtung nach Anspruch 1,
**dadurch gekennzeichnet,**
**daß** es sich bei dem Sendeoszillator (14) und dem Abtastoszillator (15) um Quarzoszillatoren handelt.

## Claims

1. A device for determining the fill level of a filling in a container comprising a transmitting unit which produces high-frequency signals and emits with a predetermined pulse repetition frequency in the direction of the surface of the filling, the high-frequency signals being reflected at the surface of the filling, a receiving unit which receives the reflected signals, a delay circuit which transforms the high-frequency signals/reflected signals according to a predetermined translation factor into low-frequency signals, the delay circuit comprising the following components:
a transmitting oscillator (14) which produces transmission pulses with a transmission frequency (*f*₂),
a sampling oscillator (15) which produces sampling pulses with a sampling frequency (*f*₁), the sampling frequency (*f*₁) being smaller than the transmission frequency (*f*₂),
a regulating/control unit (16) which adjusts the frequency difference (*f*₂ - *f*₁) between the transmitting oscillator (14) and the sampling oscillator (15) in such a way that the predetermined translation factor is reached,
and an evaluating unit which determines the fill level of the filling in the container with the aid of the propagation time of the signals,
**characterised**
**in that** the delay circuit (9) comprises a digital sampling circuit (17) which samples the transmission pulses with the sampling pulses, the digital sampling circuit (17) defining a measurement cycle, or determining the frequency difference *(f*₂ - *f*₁), by determining two successive points in time at which the rising or the falling flank of the sampling pulses coincides with the falling or rising flank of the transmission pulses, thus when the transmission frequency (*f*₂) and the sampling frequency (*f*₁) are in phase, and in that the digital sampling circuit (17) stores in a storage unit (20) the point in time at which the transmitting oscillator (14) and the sampling oscillator (15) are in phase as a starting point in time for the measurement and the determining of the frequency difference (*f*₂ - *f*₁).

2. A device according to Claim 1,
**characterised**
**in that** the transmitting oscillator (14) has a fixed transmission frequency (*f*₂) and in that the sampling frequency (*f*₁) of the sampling oscillator (15) is adjustable.

3. A device according to Claim 1,
**characterised**
**in that** the storage unit (20) is a D-flipflop (23).

4. A device according to Claim 1,
**characterised**
**in that** the storage unit (20) is a logic gate, preferably an AND gate (21), and an SR-flipflop (22).

5. A device according to Claim 1, 2, 3 or 4,
**characterised**
**in that** the regulating/control unit (16) for determining the frequency difference (*f*₂ - *f*₁) performs averaging over several measurement cycles.

6. A device according to one or more of the preceding claims,
**characterised**
**in that** the regulating/control unit (16) activates the digital sampling circuit (17) only shortly before, during or after the points in time when the transmission frequency (*f*₂) and the sampling frequency (*f*₁) are in phase.

7. A device according to one or more of the preceding claims,
**characterised**
**in that** connected downstream of the digital sampling circuit (17) are two monopulse generators (18, 19) which generate measurement pulses from the transmitted or received signals.

8. A device according to one or more of the preceding claims,
**characterised**
**in that** frequency dividers (24, 25; 26, 27) are provided which divide the transmission frequency (f₂) and/or the sampling frequency (*f*₁) before and/or after the digital sampling circuit (17) down by a predetermined division factor 2", where n=1,2,3, ... .

9. A device according to Claim 8,
**characterised**
**in that** a reset unit (26) is provided which starts the subsequent measurement cycle as soon as the phase difference between the transmission frequency (*f*₂) and the sampling frequency (*f*₁) is equal to the quotient of 360° and the division factor 2", where n =1, 2,3, ... .

10. A device according to Claim 1,
**characterised**
**in that** the transmitting oscillator (14) and the sampling oscillator (15) are quartz oscillators.

## Revendications

1. Dispositif destiné à la détermination du niveau d'un produit au sein d'un réservoir avec une unité d'émission, qui génère des signaux haute fréquence et les émet avec une fréquence de répétition d'impulsions en direction de la surface du produit, les signaux haute fréquence étant réfléchis à la surface du produit, avec une unité de réception, qui reçoit les signaux réfléchis, avec un circuit temporisateur, qui transforme les signaux haute fréquence / signaux réfléchis selon un facteur de translation prédéfini,
un oscillateur d'émission (14), qui génère des impulsions d'émission à une fréquence d'émission (*f₂*), un oscillateur d'échantillonnage (15), qui génère des impulsions d'échantillonnage à une fréquence d'échantillonnage *(f₁),* la fréquence d'échantillonnage *(f₁)* étant inférieure à la fréquence d'émission (*f₂*), une unité de régulation / commande (16), qui régule la différence de fréquence *(f₂ - f₁*) entre l'oscillateur d'émission (14) et l'oscillateur d'échantillonnage (15) de telle manière à obtenir le facteur de translation prédéfini
et avec une unité d'exploitation, qui détermine au moyen du temps de propagation des signaux le niveau du produit dans le réservoir,
**caractérisé en ce**
**que** le circuit temporisateur (9) présente un circuit d'échantillonnage numérique (17), qui échantillonne les impulsions d'émission avec les impulsions d'échantillonnage, le circuit d'échantillonnage numérique (17) définissant un cycle de mesure ou déterminant la différence de fréquence (*f₂* - *f₁*) par le fait qu'il définit deux instants consécutifs, auxquels le front montant ou descendant des impulsions d'échantillonnage coïncident avec le front montant ou descendant des impulsions d'émission, c'est-à-dire lorsque la fréquence d'émission (*f*₂) et la fréquence d'échantillonnage (*f*₁) sont en phase, et en ce que le circuit d'échantillonnage numérique (17) mémorise dans une unité de mémoire (20) l'instant, auquel l'oscillateur d'émission (14) et l'oscillateur d'échantillonnage (15) sont en phase, en tant qu'instant de départ pour la mesure et la détermination de la différence de fréquence (*f₂* - *f₁*).

2. Dispositif selon la revendication 1,
**caractérisé en ce**
**que** l'oscillateur d'émission (14) présente une fréquence d'émission fixe (*f₂*) et la fréquence d'échantillonnage (*f₁*) de l'oscillateur d'échantillonnage (15) est réglable.

3. Dispositif selon la revendication 1,
**caractérisé en ce**
**que** concernant l'unité de mémoire (20), il s'agit d'une bascule D (23).

4. Dispositif selon la revendication 1,
**caractérisé en ce**
**que** concernant l'unité de mémoire (20), il s'agit d'une porte logique, de préférence une porte ET (21) et d'une bascule SR (22).

5. Dispositif selon la revendication 1, 2, 3 ou 4,
**caractérisé en ce**
**que** l'unité de régulation / commande (16) effectue une moyenne sur plusieurs cycles de mesure pour la détermination de la différence de fréquence (*f₂* - *f₁*).

6. Dispositif selon l'une ou plusieurs des revendications précédentes,
**caractérisé en ce**
**que** l'unité de régulation / commande (16) n'active le circuit d'échantillonnage numérique (17) que peu avant, pendant et après les instants, auxquels la fréquence d'émission (*f₂*) et la fréquence d'échantillonnage (*f₁*) sont en phase.

7. Dispositif selon l'une ou plusieurs des revendications précédentes,
**caractérisé en ce**
**que** sont couplés en aval du circuit d'échantillonnage numérique (17), deux générateurs mono-impulsion (18, 19), qui génèrent des impulsions de mesure à partir des signaux d'émission et de réception.

8. Dispositif selon l'une ou plusieurs des revendications précédentes,
**caractérisé en ce**
**que** sont prévus des diviseurs de fréquence (24, 25 ; 26, 27), qui divisent la fréquence d'émission (*f₂*) et/ou la fréquence d'échantillonnage (*f₁*) en amont et/ou en aval du circuit d'échantillonnage numérique (17) d'un facteur de division prédéfini égal à 2ⁿ, où n=1,2,3, ...

9. Dispositif selon la revendication 8,
**caractérisé en ce**
**qu'**est prévue une unité de réinitialisation (26), qui démarre le cycle de mesure suivant dès que la différence de phase entre la fréquence d'émission (*f₂*) et la fréquence d'échantillonnage (*f₁*) est égale au quotient de 360° par le facteur de division 2ⁿ, où n = 1, 2, 3, ...

10. Dispositif selon la revendication 1,
**caractérisé en ce**
**que** concernant l'oscillateur d'émission (14) et l'oscillateur d'échantillonnage (15), il s'agit d'oscillateurs à quartz.
